# DEMANDE DE BREVET EUROPEEN

(11) **EP 1 600 868 A1**
(43) Date de publication de la demande: **30.11.2005**
(21) Numéro de dépôt: 04102309.4
(22) Date de dépôt: 26.05.2004
(51) Int. Cl.: G06F 17/60

(54) **Dispositif et procédé de réservation de produits de voyage**

(71) Demandeur: Amadeus s.a.s, 06410 Biot (FR)
(72) Inventeur: Blaszka, Thierry c/o Cabinet Hautier, 06000, NICE (FR); Chaumont, Gilles c/o Cabinet Hautier, 06000, NICE (FR); Daniello, Rudy c/o Cabinet Hautier, 06000, NICE (FR); Dourthe, Cédric c/o Cabinet Hautier, 06000, NICE (FR); Hoff, Fréderic c/o Cabinet Hautier, 06000, NICE (FR)
(74) Mandataire: Hautier, Jean-Louis

(57) **Abrégé**

La présente invention concerne un procédé et un dispositif de réservation de produits de voyage ainsi qu'un produit programme d'ordinateur.

L'invention comporte un système informatique central de traitement des requêtes d'utilisateur portant sur un voyage avec un trajet aller et un trajet retour, comprenant des moyens pour calculer et retourner à l'utilisateur une information relative à des produits de voyage incluant des prix de vente, ledit système informatique central étant accessible depuis au moins un poste utilisateur (1).

Il comporte :
- Un moteur de recherche de solutions de voyage (MF) pouvant accéder à au moins une base de données de segments de voyage (FDB) et présentant des moyens pour déterminer les segments aller et les segments retour répondant à des critères d'entrée, lesdits critères d'entrée comprenant au moins une date de voyage aller, une date de voyage retour et des données de définition d'un itinéraire de voyage comprenant un trajet aller et un trajet retour, et des moyens pour définir des solutions de voyage possibles par association, par paires, de segments aller et de segments retour en appliquant des règles d'association ;
- Un moteur de recherche de tarif présentant des moyens pour déterminer, par accès à au moins une base de données de tarifs (TDB), le tarif associé aux solutions de voyage pour former des produits de voyage commercialisables ;
- Un moteur de groupage (MG) des produits de voyage appliquant des critères de groupage comprenant au moins un critère d'équivalence de tarif ;
- Des moyens pour extraire de chaque groupe de produits de voyage les segments aller et les segments retour ;
- Des moyens pour produire un affichage d'informations sur au moins un groupe de produits de voyage de façon séparée pour les segments aller et les segments retour, au niveau du poste utilisateur (1).

## Description

La présente invention concerne un dispositif de réservation de produits de voyage ainsi qu'un procédé de traitement d'une requête d'un utilisateur et un produit programme d'ordinateur.

L'invention trouvera son application particulière dans le domaine de systèmes de réservation par ordinateur permettant, généralement via un réseau de communication pouvant être notamment de large extension du type Internet, l'accès d'une pluralité d'individus ou d'agents de voyage à des produits de voyage.

Les systèmes de réservation ainsi proposés permettent la consultation d'informations relatives aux produits de voyage et, généralement, leur mise en vente. L'invention est en particulier relative au traitement de requêtes d'utilisateurs pour des services de transport du type aller/retour.

Suivant l'état de la technique, une procédure standard de traitement d'une requête d'utilisateur souhaitant obtenir des informations sur des produits de voyage y compris une information de prix de vente, consiste en une procédure de détermination de tarif basé sur un itinéraire complet incluant un aller et un retour.

Plus précisément, la partie aller et la partie retour des solutions de voyage proposées sont intimement liés et considérées comme une seule entité pour l'offre en vente.

Un inconvénient lié à ce type de détermination est que le client, même s'il a déterminé un intervalle assez précis de critères (notamment un intervalle de prix), a à consulter un très grand nombre d'options de voyage de façon à trouver la combinaison de trajet aller et de trajet retour qui lui convient le mieux.

Dans la pratique, compte-tenu du très grand nombre de solutions de voyages existantes ou pouvant exister, il n'est pas possible de les présenter toutes au client. On est donc amené à sélectionner des solutions de réponse à des requêtes de client principales en vue de leur affichage à l'exclusion d'autres solutions. Les critères permettant de sélectionner les solutions de voyage à proposer finalement au client s'avèrent délicats à déterminer.

En résumé, ce type de procédure de traitement de requête ne donne pas satisfaction ni au client qui se voit retourner un grand nombre de solutions peu lisibles et cependant non exhaustives, ni au fournisseur de solutions de voyage qui doit mettre en oeuvre d'importants moyens de calcul sans pouvoir au final proposer aux utilisateurs un affichage de l'intégralité des prestations qu'il pourrait fournir.

Une alternative de procédure de tarification actuellement proposée, généralement, par des compagnies aériennes dites « à bas prix » consiste à fournir à l'utilisateur une information de tarif entièrement séparée pour les segments aller et les segments retour de l'itinéraire désiré. Cela permet au client de choisir indépendamment une solution tarifaire pour chaque paire d'origine et de destination de voyage.

Ainsi, par exemple, dans le cas d'une requête concernant un vol allerretour Sydney/Melbourne/Sydney, une première procédure est réalisée pour déterminer tous les segments de voyage Sydney/Melbourne correspondants et leur appliquer une tarification. Une deuxième procédure est réalisée de façon totalement indépendante, pour déterminer les segments retour Melbourne/Sydney possibles et leur appliquer une tarification.

L'affichage produit au niveau du poste utilisateur consiste substantiellement en deux tableaux, un tableau faisant la synthèse des solutions proposées pour les vols aller et un second tableau faisant la synthèse des propositions de vols retour avec des solutions tarifaires associées. L'utilisateur peut alors sélectionner, dans le premier tableau, la solution de vol aller qu'il a retenu et procéder de même dans le deuxième, de façon à parvenir à une solution du type aller/retour dont la tarification sera exactement la somme des tarifications individuelles du segment aller et du segment retour.

Un avantage de cette solution est que l'utilisateur peut visualiser et choisir indépendamment les propositions de voyage aller et retour. Cela étant, un inconvénient de cette technique est qu'elle ne peut être utilisée que par des fournisseurs de voyage (tels des compagnies aériennes) ayant une structure de tarification adaptée à ce type de traitement. En particulier, cette procédure exclut des tarifications spéciales pour des voyages aller/retour.

En conséquence, pour des fournisseurs de voyage traditionnels ayant déjà une structure de tarification en place, il apparaît impossible ou particulièrement coûteux de migrer leurs bases de données de tarifs vers une structure informatique permettant un tel procédé de tarification séparée pour les segments aller et les segments retour.

Il existe donc un besoin d'améliorer l'interface utilisateur en affichant séparément des propositions commerciales pour des trajets aller et des trajets retour tout en préservant un mode de calcul de tarifs habituel avec une détermination de prix couplée pour les trajets aller et retour.

Un autre avantage de l'invention est qu'elle permet de réduire très sensiblement les temps de calcul de prix de vente de toutes les combinaisons aller et retour possibles.

Par ailleurs, l'invention assure une plus grande visibilité de la proposition commerciale faite à l'utilisateur en particulier en ce qu'elle permet de proposer un grand nombre de produits de voyage par combinaison de vols aller et de vols retour tout en étant compatible avec les structures de tarification de fournisseurs de voyage traditionnels.

Suivant une possibilité additionnelle, l'utilisation de l'invention est rendue encore plus pratique par une fonction de calendrier assurant la formation d'une requête aisée pour l'utilisateur, en deux temps.

En outre, une autre option permet de n'afficher que certaines solutions de voyage mais de proposer immédiatement à l'utilisateur l'affichage d'informations relatives à d'autres produits de voyage pour une même tarification, par l'intermédiaire d'une fonction « plus de produits ».

La présente invention concernant d'abord un dispositif de réservation de produits de voyage comportant un système informatique central de traitement des requêtes d'utilisateur portant sur un voyage avec un trajet aller et un trajet retour, comprenant des moyens pour calculer et retourner à l'utilisateur une information relative à des produits de voyage incluant des prix de vente, ledit système informatique central étant accessible depuis au moins un poste utilisateur,

Selon l'invention ce dispositif comporte :
- Un moteur de recherche de solutions de voyage pouvant accéder à au moins une base de données de segments de voyage et présentant des moyens pour déterminer les segments aller et les segments retour répondant à des critères d'entrée, lesdits critères d'entrée comprenant au moins une date de voyage aller, une date de voyage retour et des données de définition d'un itinéraire de voyage comprenant un trajet aller et un trajet retour, et des moyens pour définir des solutions de voyage possibles par association, par paires, de segments aller et de segments retour en appliquant des règles d'association ;
- Un moteur de recherche de tarif présentant des moyens pour déterminer, par accès à au moins une base de données de tarifs, le tarif associé aux solutions de voyage pour former des produits de voyage commercialisables ;
- Un moteur de groupage des produits de voyage appliquant des critères de groupage comprenant au moins un critère d'équivalence de tarif ;
- Des moyens pour extraire de chaque groupe de produits de voyage les segments aller et les segments retour ;
- Des moyens pour produire un affichage d'informations sur au moins un groupe de produits de voyage de façon séparée pour les segments aller et les segments retour, au niveau du poste utilisateur.

Suivant des modes de réalisation préférés mais non limitatifs, ce dispositif est tel que :
o La requête de l'utilisateur comporte un intervalle de dates de voyage aller et/ou retour ;
o Il comporte une application de calendrier, pour chaque combinaison de date de voyage aller et de date de voyage retour, pour déterminer le produit de voyage ayant le tarif le plus bas ;
o Il comporte des moyens pour produire un affichage d'informations relatives au produit de voyage répondant à la requête et ayant le tarif le plus bas, pour chaque combinaison de dates de voyage aller et de dates de voyage retour, au niveau du poste utilisateur permettant à l'utilisateur de sélectionner un produit de voyage pour une combinaison de dates de voyage aller et retour ;
o Il comporte des moyens pour retourner ladite combinaison de dates de voyage aller et retour au système central pour l'intégrer dans les critères d'entrée en tant que date de voyage aller et date de voyage retour
   - Le moteur de recherche de tarifs est configuré pour déterminer, en premier lieu, le tarif des solutions de voyage ne présentant pas de segments aller ni de segments retour communs ;
   - Les critères de groupage comportent au moins un des critères suivants :
      o Identité des tronçons des segments
      o Identité du prix total par voyageur
      o Identité des paramètres de tarification
   - Il comporte une base de données de familles de tarifs contenant des règles de détermination de l'appartenance à une famille de tarifs pour chaque tarif de voyage, ladite base de données de familles de tarifs étant accessible par le moteur de recherche de tarifs pour trier les produits de voyage par famille de tarifs ;
   - Les critères de groupage comportent un critère d'identité de famille de tarifs ;
   - La base de données de familles de tarifs inclut des classes commerciales de familles de tarifs associant un groupe de famille de tarifs et un marché géographique prédéfini, pour un ensemble de dates de requête prédéterminé ;
   - Il comporte des moyens de sélection d'au moins une classe commerciale de familles de tarifs, pour déterminer des produits de voyage répondant à la requête de l'utilisateur.

L'invention concerne également un procédé de traitement d'une requête d'un utilisateur portant sur un voyage avec un trajet aller et un trajet retour, dans lequel on calcule et on retourne à l'utilisateur une information relative à des produits de voyage incluant des prix de vente, comportant les étapes suivantes :
- Détermination, par accès à au moins une base de données de segments de voyage, des segments aller et des segments retour répondant à des critères d'entrée, lesdits critères d'entrée comprenant au moins une date de voyage aller, une date de voyage retour et des données de définition d'un itinéraire de voyage comprenant un trajet aller et un trajet retour ;
- Définition des solutions de voyage possibles par association, par paires, de segments aller et de segments retour en appliquant des règles d'association ;
- Détermination par accès à au moins une base de données de tarifs, le tarif associé aux solutions de voyage pour former des produits de voyage commercialisables ;
- Un groupage des produits de voyage en appliquant des critères de groupage comprenant au moins un critère d'équivalence de tarif ;
- Extraction de chaque groupe de produits de voyage des segments aller et des segments retour ;
- Production d'un affichage d'informations sur au moins un groupe de produits de voyage de façon séparée pour les segments aller et les segments retour, au niveau du poste utilisateur.

A titre avantageux, ce procédé comporte les étapes additionnelles suivantes :
- Il comporte les étapes préliminaires suivantes :
   o Réception d'une requête d'un utilisateur comprenant un intervalle de dates de voyage aller et/ou retour ;
   o Un traitement de la requête par une application de calendrier consistant à, pour chaque combinaison de dates de voyage aller et de dates de voyage retour, déterminer le produit de voyage ayant le tarif le plus bas ;
   o Production d'un affichage d'informations relatives au produit de voyage répondant à la requête et ayant le tarif le plus bas, pour chaque combinaison de dates de voyage aller et de dates de voyage retour, au niveau du poste utilisateur ;
   o Sélection au niveau du poste utilisateur d'un produit de voyage pour une combinaison de dates de voyage aller et retour ;
   o Envoi de ladite combinaison de dates de voyage aller et retour au système central pour l'intégrer dans les critères d'entrée en tant que date de voyage aller et date de voyage retour
- On détermine le tarif associé aux solutions de voyage en commençant par les solutions de voyage ne présentant pas de segment aller ni de segment retour en commun ;
- On utilise comme critère de groupage au moins un des critères suivants :
   o Identité des tronçons des segments
   o Identité du prix total par voyageur
   o Identité des paramètres de tarification
- On met en oeuvre les étapes suivantes :
   o Accès à une base de données de famille de tarifs contenant des règles de détermination de l'appartenance à au moins une famille de tarifs pour chaque tarif de voyage ;
   o Tri des produits de voyage par famille de tarifs
- On utilise l'appartenance à une même famille de tarifs comme critère de groupage des produits de voyage ;
- La création, dans la base de données de familles de tarifs, des classes commerciales de familles de tarifs associant au moins un groupe de familles de tarifs à un marché géographique prédéfini, pour un ensemble de dates de requête prédéterminé ;
- On sélectionne une ou plusieurs classes commerciales de familles de tarifs pour déterminer des produits de voyage répondant à la requête de l'utilisateur ;
- Il comporte notamment les opérations suivantes :
   o On produit l'affichage d'informations pour un nombre prédéfini de segments aller et de segments retour d'un groupe de produits de voyage ;
   o On produit l'affichage d'un message de proposition d'affichage d'informations pour d'autres segments aller ou d'autres segments retour du groupe de produits de voyage ;
   o Sur saisie d'une instruction par l'utilisateur, on produit ledit affichage d'informations pour d'autres segments aller ou d'autres segments retour du groupe de produits de voyage ;
- Il comporte également les opérations suivantes :
   o Production d'un affichage d'informations pour des produits de voyage du groupe de produit de voyage au tarif le plus bas ;
   o Production de l'affichage d'un message de proposition d'affichage d'informations pour au moins un autre groupe de produits de voyage ;
   o Sur saisie d'une instruction par l'utilisateur, production d'un affichage d'informations pour ledit autre groupe de produits de voyage.

L'invention concerne également un produit programme d'ordinateur comprenant des instructions de programme pour, lorsqu'il est exécuté par un ordinateur :
- Déterminer, par accès à au moins une base de données de segments de voyage, les segments aller et les segments retour répondant à des critères d'entrée comprenant au moins une date de voyage aller, une date de voyage retour et des données de définition d'un itinéraire de voyage comprenant un trajet aller et un trajet retour ;
- Définir des solutions de voyage possibles par association, par paires, de segments aller et de segments retour en appliquant des règles d'associations ;
- Déterminer, par accès à au moins une base de données de tarifs, le tarif associé aux solutions de voyage pour former des produits de voyage commercialisables ;
- Grouper les produits de voyage en appliquant des critères de groupage comprenant au moins un critère d'équivalence de tarif ;
- Extraire de chaque groupe de produits de voyage les segments aller et les segments retour ;
- Produire un affichage d'informations sur au moins un groupe de produits de voyage de façon séparée pour les segments aller et les segments retour.

Les dessins ci-joints sont donnés à titre d'exemples et ne sont pas limitatifs de l'invention. Ils représentent seulement un mode de réalisation de l'invention et permettront de la comprendre aisément.
La figure 1 montre de façon schématique, une structure d'implémentation possible du dispositif de l'invention.
La figure 3 illustre la transmission de flux de requête et de réponse au travers d'un dispositif de l'invention suivant un mode de réalisation préféré et la figure 2 montre la formation d'une requête préliminaire avec une fonction de calendrier.
La figure 4 est un exemple d'affichage produit par l'invention au niveau d'un poste client.
La figure 5 est un exemple d'affichage au niveau du poste utilisateur avec une fonction calendrier.
Les figures 6a, 6b illustrent un mode de réalisation additionnel de l'invention avec une fonction d'affichage de solutions additionnelles.
La figure 7 montre un exemple de succession des étapes de mise en oeuvre de l'invention.
La figure 8 illustre une possibilité de structure de base de données de familles de tarifs.

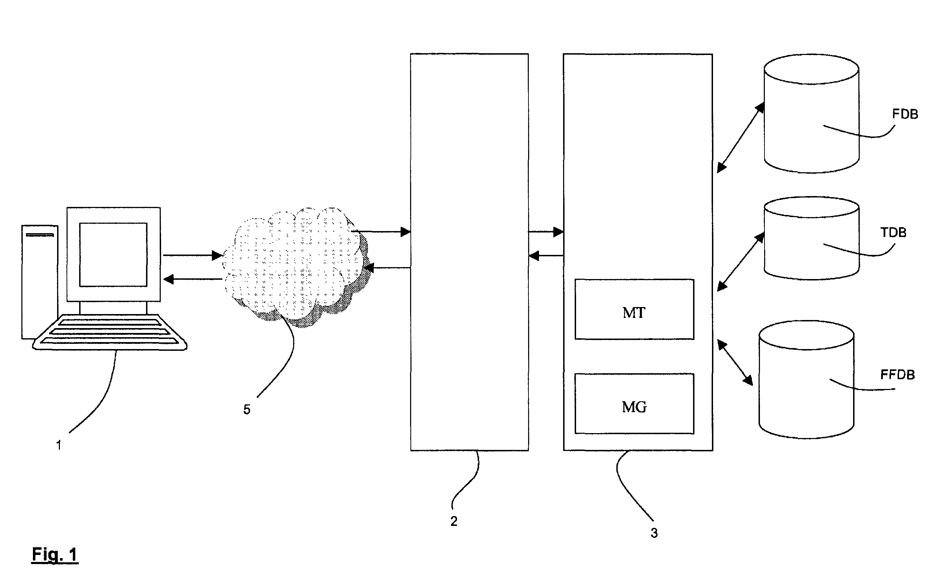

Comme représenté à la figure 1, le dispositif selon l'invention comporte une pluralité de composants communiquant entre eux par un réseau de communication pouvant être un réseau de large extension 5.

Le dispositif permet un accès depuis un poste utilisateur 1 auquel un individu tel qu'un client final ou un agent de voyage peut accéder. Généralement, le poste utilisateur 1 est un ordinateur personnel pourvu de moyens d'affichage ainsi que de moyens de saisie de données.

Le poste utilisateur 1 inclut en outre avantageusement des moyens de navigation sous forme d'une application informatique de navigateur tel le produit commercialisé sous la marque déposée Internet Explorer. Des moyens de communication, par exemple du type modem ou routeur, sont également présents.

Via le poste utilisateur 1, l'utilisateur peut saisir et transmettre des requêtes au dispositif, ces requêtes portant sur un voyage présentant un trajet aller et un trajet retour.

Dans la solution illustrée en figure 1, la requête transite par un serveur du type couramment dénommé serveur Web assurant l'interfaçage entre le poste utilisateur 1 et les autres moyens informatiques déportés.

Egalement communiquant avec le serveur Web 2, un serveur d'application 3 est présent et permet l'implémentation de certains moyens de l'invention.

Le serveur d'application 3 est lui-même communiquant avec une variété de bases de données à savoir respectivement , une base de données de segments de voyage (FDB) réalisant un inventaire de tous les segments existants et pouvant être proposés à un client, une base de données de tarifs (TDB) permettant le stockage des différentes données relatives aux tarifications applicables aux solutions de voyage et une base de données de familles de tarifs (FFDB) contenant des règles de détermination de l'appartenance à une famille de tarifs pour chaque tarif de voyage tel que cela sera explicité plus loin.

Pour la suite de la description, on appelle itinéraire un trajet global d'un voyageur comprenant un trajet aller et un trajet retour.

L'association d'un trajet aller et d'une date de voyage aller constitue un segment aller. De façon similaire on peut former des segments retour par association d'un trajet retour et d'une date de voyage.

De même, par choix terminologique, on appelle solution de voyage dans la suite de la description, une association d'un segment aller et d'un segment retour.

L'affectation d'un tarif à une solution de voyage permet la création d'un produit de voyage, à propos duquel on peut retourner des informations à l'utilisateur en incluant le prix de vente.

En ce qui concerne la structure de tarification, on peut utiliser la configuration suivante donnée à titre indicatif et utilisée pour la suite de la description dans le mode de réalisation préféré de l'invention.

Les tarifs sont en effet avantageusement rangés dans des familles de tarifs. Des règles prédéfinies permettent de déterminer l'appartenance d'un tarif à une famille.

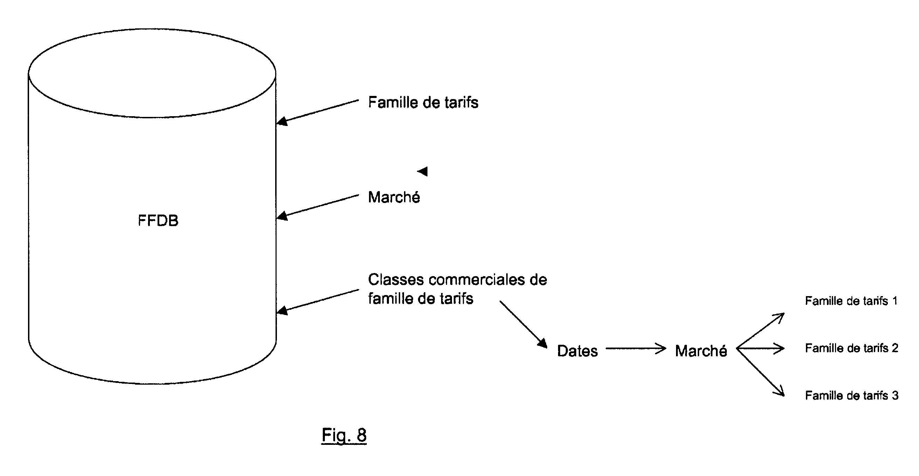

Dans ce cadre, et conformément aux figures 1 et 8, on met en oeuvre une base de données de familles de tarifs (FFDB).

Cette base de données contient des règles de détermination de l'appartenance à une famille de tarifs pour chaque famille de voyage et est accessible par un moteur de recherche constituée par le moteur de recherche de tarifs (MT). On aura présenté en figure 8 les informations contenues dans la base de données de familles de tarifs (FFDB).

A cette figure, les familles de tarifs sont renseignées dans la base de données. Sont également définis des marchés correspondants à des zones géographiques d'application d'un ensemble de familles de tarifs. Ces marchés peuvent être des territoires nationaux, régionaux, ou encore internationaux. Il est par ailleurs possible que le marché soit systématiquement défini comme mondial.

La base de données de familles de tarifs permet également de définir des classes commerciales de familles de tarifs. Ces classes commerciales sont associées à un groupe de familles de tarifs et à un marché géographique pour un ensemble de dates de voyage prédéterminées.

Ainsi, en connaissant les dates pertinentes et le marché considéré, il est possible de retrouver les familles de tarifs appartenant à la classe commerciale de familles de tarifs et ensuite de connaître leurs attributs.

Les classes commerciales de familles de tarifs peuvent être déterminées par un administrateur appartenant à un fournisseur de voyage, telle une compagnie aérienne. Pour le traitement de requêtes d'utilisateur concernant une information sur des produits de voyage, on applique les règles fixées pour retourner les informations tarifaires. En particulier, les produits de voyage proposés en réponse aux requêtes des utilisateurs dépendront des règles fixées par l'administrateur de la base de données (FFDB).

La structure de tarification ainsi décrite permet notamment de cibler l'offre commerciale, par exemple suivant le type d'utilisateur final. Ainsi, via un site Internet supporté par un serveur Web, on pourra proposer des offres plus particulièrement destinées aux jeunes et via un autre site des offres plus particulièrement destinées à des professionnels. Il est également possible par un même site Internet de proposer à l'utilisateur une sélection de classes commerciales de familles de tarifs à utiliser pour le traitement de sa requête.

A titre avantageux, l'affichage produit au niveau du poste client 1 est classé par familles de tarifs comprises dans la classe commerciale utilisée pour le traitement de la requête.

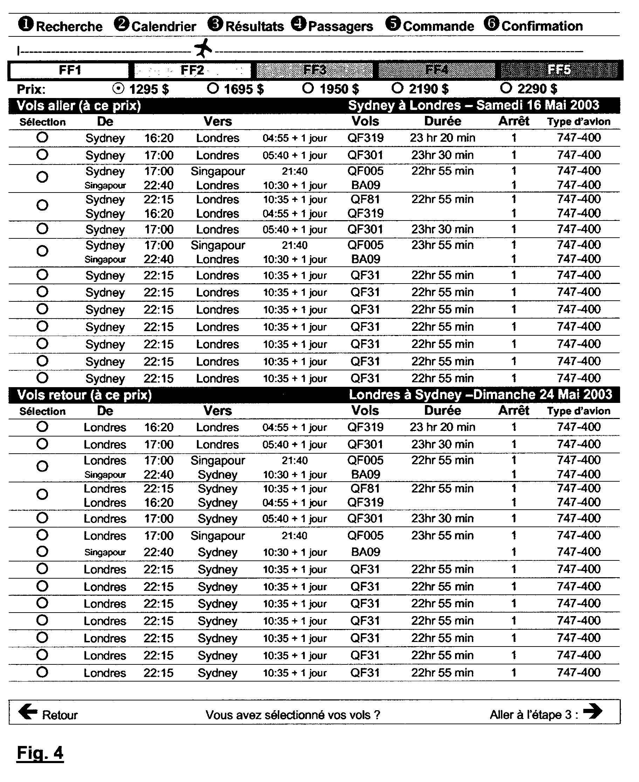

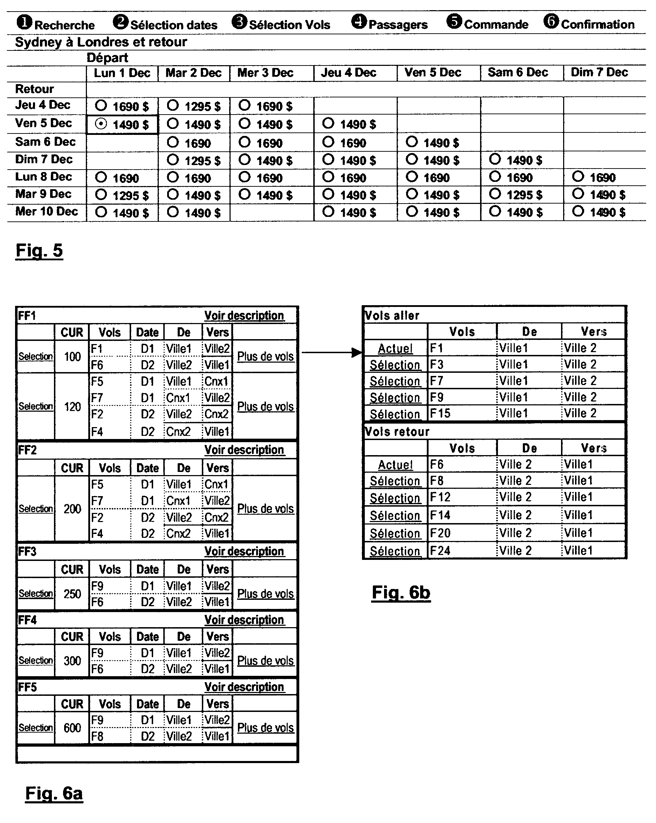

Ainsi, dans l'exemple illustré aux figures 4 et 6a, 6b, les termes FF1, FF2, FF3, FF4, FF5 correspondent à des familles de tarifs pouvant être simultanément ou successivement visualisées par l'utilisateur.

On décrit ci-après plus précisément le principe général du traitement opéré par la présente invention.

Ce traitement nécessite l'extraction des segments aller et des segments retour d'un groupe de produits de voyage, de sorte à produire un affichage séparé.

A cet effet, on réalise le groupage des solutions de voyage ayant une même valeur pour les attributs suivants :
- Famille de tarifs
- Point d'origine et de destination du segment et éventuel pour l'intermédiaire (telle une escale)
- Détail de prix par type de passager comprenant :
   - Prix total par passager
   - Montant de taxe par passager
   - Message d'information additionnelle (notamment présence de pénalités, conditions d'émission de billet)
- Détail de tarif pour chaque segment requis comprenant :
   - Classe de tarifs et point de coupure tarifaire
   - Code de réservation et de cabine correspondante
   - Types de tarifs (publiés, négociés, entreprises, tarifs a réduction dynamique)
   - Types de réductions passager appliquées
   - Famille de tarifs de chaque tarif

Pour un groupe donné, les informations communes décrites ci-dessus sont renseignées une seule fois en référence aux divers segments proposés pour couvrir chaque solution de voyage.

Selon l'invention, chaque segment proposé pour l'aller combiné avec n'importe quel segment proposé en retour à l'intérieur d'un même groupe de solutions de voyage construit selon les règles d'appartenance précédentes est considéré comme conduisant au même prix de vente. Cela permet de produire un affichage et de réaliser une sélection séparée des segment aller et des segments retour.

Additionnellement, suivant la diversité des vols disponibles, le nombre des solutions de voyage proposé peut être considérablement augmenté. Par exemple, une réponse suivant une procédure standard de tarification permet de proposer les combinaisons suivantes :
- Segment Aller 1 / Segment Retour 1
- Segment Aller 2 / Segment Retour 2
- Segment Aller 3 / Segment Retour 3
- Segment Aller 4 / Segment Retour 4
- Segment Aller 5 / Segment Retour 5

Grâce à la présente invention, dans l'exemple précédent, on peut déduire vingt solutions de voyage supplémentaires par des combinaisons supplémentaires des segments :
- Segment Aller 1 / Segment Retour 2
- Segment Aller 1 / Segment Retour 3
- Segment Aller 1 / Segment Retour 4
- Segment Aller 1 / Segment Retour 5
- Segment Aller 2/ Segment Retour 1
- Segment Aller 3 Segment Retour 1
- Etc...

A titre préféré, par soucis d'efficacité et pour obtenir une variété de propositions maximale, on commence l'association de paires de segments aller et retour, d'abord suivant les séquences suivantes :
- O1 I1, O2 I2, O3 I3, 04 I4, 05 I5, O6 I6, O7 I7, O8 I8, O9, I9, O10, I10 (dans le cas de dix segments proposés pour l'aller O1, O2, O3, 04, 05, O6, O7, O8, O9, O10 et de dix segment proposés en retour I1, I2, I3, I4, I5, I6, I7, I8, I9, I10)
- On poursuit ensuite l'association en combinant le segment aller 1 avec les différents segments retour possible O1 I2, O1 I3, O1 I4, 01 I5, 01 I6, O1 I7, O1 I8, O1 I9, O1 I10 et ainsi de suite pour les différents segments aller suivants (O2, O3, ...).

Dans les règles d'association, on peut prédéfinir un nombre de solutions de voyage maximales à calculer de façon à stopper le traitement à un certain nombre de combinaisons.

On donne ci-après un exemple de groupage de solutions de voyage dans un cas simple de transport aérien entre l'aéroport de Paris Orly et l'aéroport de Nice (France).

### EXEMPLE 1 DE GROUPEMENT DE PRODUITS DE VOYAGE :

Pour une requête PARIS-NICE le 14/01/2004, NICE-PARIS le 18/01/2004 pour un adulte et un enfant, les produits de voyage suivants sont proposés :

### Produit de voyage 1 :

• Solution de voyage :
Aller 1
Vol N° AF 6208 le 14/01/2004 à 10h00 de ORLY à NICE
Retour 1
Vol N° AF6213 le 18/01/2004 à 12h10 de NICE à ORLY

• Solution de tarif :
Famille de tarifs : AF POUR TOUS
Pour le passager adulte :
Prix total : 149,66 Euros
Montant de la taxe : 40,66 Euros
Note : « Les billets ne sont pas échangeables avant le départ »
Détails du prix :

| | Classe de tarif | Classe | Cabine | Type de tarif | Type de passager | Famille de tarifs |
|---|---|---|---|---|---|---|
| Vol aller | WAP10 | W | Y | Publique | Adulte | AFPOURTOUS |
| Vol retour | WAP10 | W | Y | Publique | Adulte | AFPOURTOUS |

Pour un passager enfant :
Prix total : 95,66 Euros
Montant de la taxe : 40,66 Euros
Message : « Les billets ne sont pas échangeables avant le départ »
Détails du prix :

| | Classe de tarif | Classe | Cabine | Type de tarif | Type de passager | Famille de tarifs |
|---|---|---|---|---|---|---|
| Vol aller | WAP10 | W | Y | Publique | Enfant | AFPOURTOUS |
| Vol retour | WAP10 | W | Y | Publique | Enfant | AFPOURTOUS |

### Produit de voyage 2 :

• Solution de voyage :
Aller 2
Vol N°AF 6210 le 14/01/2004 à 11h00 de ORLY à NICE
Retour 2
Vol N° AF6203 le 18/01/2004 à 08h10 de NICE à ORLY

• Solution de tarif :
Famille de tarifs : AF POUR TOUS
Pour le passager adulte :
Prix total : 149,66 Euros
Montant de la taxe : 40,66 Euros
Note : « Les billets ne sont pas échangeables avant le départ »
Détails du prix :

| | Classe de tarif | Classe | Cabine | Type de tarif | Type de passager | Famille de tarifs |
|---|---|---|---|---|---|---|
| Vol aller | WAP10 | W | Y | Publique | Adulte | AFPOURTOUS |
| Vol retour | WAP10 | W | Y | Publique | Adulte | AFPOURTOUS |

Pour un passager enfant :
Prix total : 95,66 Euros
Montant de la taxe : 40,66 Euros
Message : « Les billets ne sont pas échangeables avant le départ »
Détails du prix :

| | Classe de tarif | Classe | Cabine | Type de tarif | Type de passager | Famille de tarifs |
|---|---|---|---|---|---|---|
| Vol aller | WAP10 | W | Y | Publique | Enfant | AFPOURTOUS |
| Vol retour | WAP10 | W | Y | Publique | Enfant | AFPOURTOUS |

Ces recommandations peuvent être groupées dans :

### Groupe de produits de voyage 1 :

• Solutions de voyage :
Produit de voyage 1 : Aller 1 / Retour 1
Produit de voyage 2 : Aller 2 / Retour 2

• Solution de tarifs :
Famille de tarifs : AF POUR TOUS
Pour le passager adulte :
Prix total : 149,66 Euros
Montant de la taxe : 40,66 Euros
Note : « Les billets ne sont pas échangeables avant le départ »
Détails du prix :

| | Classe de tarif | Classe | Cabine | Type de tarif | Type de passager | Famille de tarifs |
|---|---|---|---|---|---|---|
| Vol aller | WAP10 | W | Y | Publique | Adulte | AFPOURTOUS |
| Vol retour | WAP10 | W | Y | Publique | Adulte | AFPOURTOUS |

Pour un passager enfant :
Prix total : 95,66 Euros
Montant de la taxe : 40,66 Euros
Message : « Les billets ne sont pas échangeables avant le départ »
Détail du prix :

| | Classe de tarif | Classe | Cabine | Type de tarif | Type de passager | Famille de tarifs |
|---|---|---|---|---|---|---|
| Vol aller | WAP10 | W | Y | Publique | Enfant | AFPOURTOUS |
| Vol retour | WAP10 | W | Y | Publique | Enfant | AFPOURTOUS |

Avec les propositions de segments suivants :
Aller 1 :
   Vol N°AF 6208 le 14/01/2004 à 10h00 de ORLY à NICE
Aller 2 :
   Vol N°AF 6210 le 14/01/2004 à 11h00 de ORLY à NICE
Retour 1 :
   Vol N°AF 6213 le 18/01/2004 à 12h10 de NICE à ORLY
Retour 2 :
   Vol N°AF 6203 le 18/01/2004 à 8h10 de NICE à ORLY
   Depuis ce groupe de deux produits de voyage, le serveur Web peut proposer deux produits de voyage supplémentaires pour le même tarif :
      Produit de voyage 3 : Aller 1 / Retour 2
      Produit de voyage 4 : Aller 2 / Retour 1

On donne ci-après un autre exemple dans lequel l'association de solutions de voyage n'est pas rendue possible car les solutions de voyage ne répondent pas aux règles d'association applicables.

### EXEMPLE 2 DE GROUPEMENT DE PRODUITS DE VOYAGE :

Pour une requête SYDNEY-SINGAPOUR le 11/02/2004 pour un adulte, les produits de voyage suivants sont proposés :

### Produit de voyage 1 :

- Solutions de voyage :
   Aller 1
   Vol N°QF 411 le 11/02/2004 à 14h30 de SYDNEY à MELBOURNE
   Vol N°QF 9 le 11/02/2004 à 17h10 de MELBOURNE à SINGAPOUR
   Retour 1
   Vol N°QF 52 le 18/02/2004 à 21h10 de SINGAPOUR à BRISBANE
   Vol N°QF 86 le 19/02/2004 à 7h55 de BRISBANE à SYDNEY
- Solution de tarifs :
   Famille de tarif : EXCURSION
   Pour le passager adulte :
      Prix total : 805,93 Euros
      Montant de la taxe : 63,93 Euros
      Note : « Les billets ne sont pas échangeables avant le départ »
      Détails du prix :

| | Classe de tarif | Classe | Cabine | Type de tarif | Type de passager | Famille de tarifs |
|---|---|---|---|---|---|---|
| Vol aller | KLEE35 | K | Y | Publique | Adulte | EXCURSION |
| | KLEE35 | K | Y | Publique | Adulte | EXCURSION |

| | | | | | | |
|---|---|---|---|---|---|---|
| Vol retour | KLEE35 | K | Y | Publique | Adulte | EXCURSION |
| | KLEE35 | K | Y | Publique | Adulte | EXCURSION |

### Produit de voyage 2 :

- Solutions de voyage :
   Aller 2
   Vol N°QF 524 le 11/02/2004 à 12h05 de SYDNEY à BRISBANE
   Vol N°QF 51 le 11/0212004 à 14h00 de BNE à SINGAPOUR
   Retour 2
   Vol N°QF 10 le 18/02/2004 à 20h05 de SINGAPOUR à MELBOURNE
   Vol N°QF 416 le 19/02/2004 à 8h30 de MELBOURNE à SYDNEY
- Solution de tarifs :
   Famille de tarif : EXCURSION
   Pour le passager adulte :
      Prix total : 805,93 Euros
      Montant de la taxe : 63,93 Euros
      Note : « Les billets ne sont pas échangeables avant le départ »
      Détails du prix :

| | Classe de tarif | Classe | Cabine | Type de tarif | Type de passager | Famille de tarifs |
|---|---|---|---|---|---|---|
| Vol aller | KLEE35 | K | Y | Publique | Adulte | EXCURSION |
| | KLEE35 | K | Y | Publique | Adulte | EXCURSION |
| Vol retour | KLEE35 | K | Y | Publique | Adulte | EXCURSION |
| | KLEE35 | K | Y | Publique | Adulte | EXCURSION |

Ces produits de voyage ne peuvent pas être groupés parce que les escales ne sont pas les mêmes ; l'aller est via MELBOURNE et le retour via BRISBANE pour le produit de voyage 1, alors que l'aller est via BRISBANE et le retour via MELBOURNE pour le produit de voyage 2.

Pour réaliser le traitement de l'invention, on peut utiliser les bases de données précédemment décrites (Base de données de segments de voyage FDB, base de données de tarifs TDB, et base de données de familles de tarifs FFDB).

Ces bases de données peuvent être accédées par des moteurs de recherche et en particulier par un moteur de recherche de tarifs MT, un moteur de groupage MG et un moteur de recherche de solutions de voyage MF.

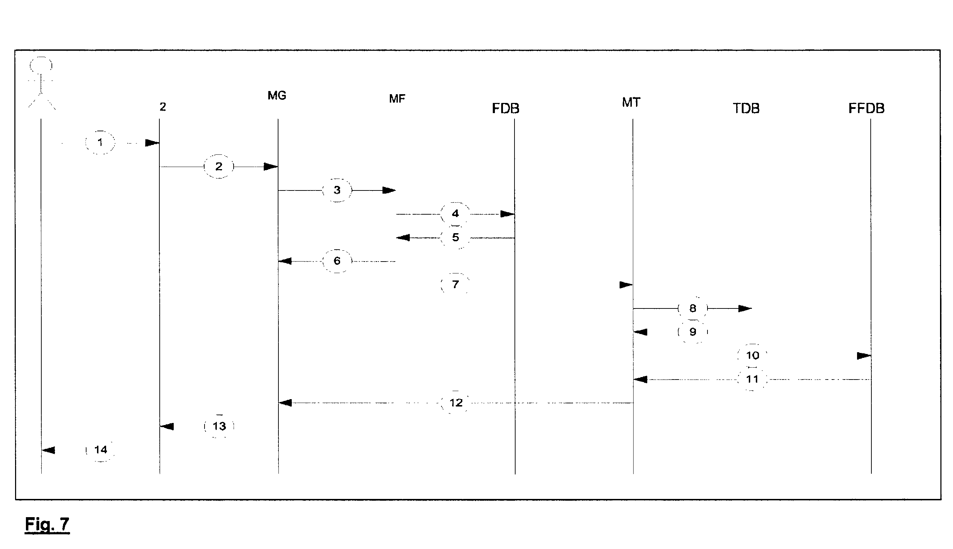

On décrit maintenant plus en détail les étapes possibles du traitement de l'invention en référence à la figure 7.
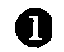 A cette figure, l'utilisateur entre une requête de solutions de voyage pour un itinéraire déterminé en spécifiant des dates de voyage et les points d'origine et de destination souhaités. L'utilisateur peut également saisir d'autres préférences (escale, classe de familles de tarifs souhaitée, ...). Cette saisie est opérée au niveau du poste client 1 et est adressée au serveur Web 2 pour traitement.
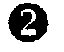 Le serveur Web 2 retranscrit la requête en la formatant et en l'adressant au moteur de groupage (MG) de solutions de voyage. L'intervention du serveur Web 2 permet d'ajouter des options par défaut et des données d'identification de requête.
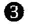 Basé sur ces données en entrée, le moteur de groupage (MG) envoie une requête au moteur de solutions de voyage (MF) pour la détermination des solutions de voyage.
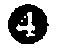 Le moteur de solution de voyage (MF) requiert de la base de données de segments de voyage (FDB) l'extraction des segments aller et des segments retour correspondants.
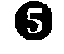 Les segments aller et retour répondant aux critères d'entrée, sont retournés par la base de données de segments de voyage (FDB) au moteur de recherche de solutions de voyage (MF)
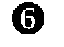 Les solutions de voyage sont alors construites en combinant les segments aller et retour issus de la base de données de segments de voyage FDB et les solutions sont retournés au moteur de groupage (MG).
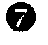 Le moteur de groupage (MG) adresse une requête en détermination des produits de voyage au moteur de recherche de tarifs (MT) en lui envoyant les critères d'entrée initiaux et les solutions de voyage déterminées par le moteur de recherche de solutions de voyage (MF).
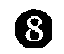 Le moteur de recherche de tarifs (MT) adresse une requête à la base de données de tarifs (TDB) pour déterminer les tarifs correspondants aux solutions de voyage.
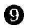 Les tarifs en vigueur sont retournés par la base de données de tarifs (TDB) au moteur de recherche de tarifs (MT)
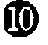 Le moteur de tarifs (MT) adresse une requête à la base de données de familles de tarifs (FFDB) pour déterminer les familles de tarifs répondant aux critères d'entrée de la requête.
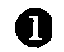 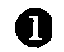 Les familles de tarifs correspondant sont retournées au moteur de recherche de tarifs (MT).
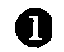 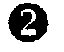 Le moteur de recherche de tarifs (MT) calcule des solutions tarifaires par combinaison de tarifs. Les produits de voyage sont alors construits en associant une solution tarifaire aux solutions de voyage préalablement construites. Le moteur de recherche de tarifs (MT) retourne alors au moteur de groupage (MG) les produits de voyage ainsi créés avec l'indication de la famille de tarifs à laquelle ils sont associés.
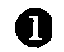 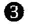 Le moteur de groupage (MG) réalise un groupage des produits de voyage répondant aux règles définies et retourne les groupes formés au serveur Web (2).
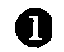 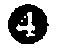 Le serveur Web (2) extrait des groupes de produits de voyage, la liste des segments aller à proposer et la liste des segments retour à proposer avec la famille de tarifs qui leur est associée. L'utilisateur, via l'application embarquée au niveau du poste utilisateur 1, se voit proposer les allers et les retours de façon indépendante par niveau de prix.

Dans le cas précédemment décrit, l'application implémentée au niveau du poste client 1 ne nécessite aucune configuration particulière du poste puisqu'il peut s'agir d'une application de navigation du type Internet Explorer (Marque déposée). Ce navigateur est en effet à même à fournir l'interface graphique répondant à la requête de l'utilisateur.

La figure 4 donne un exemple de l'interface produite à l'issue des étapes précédemment produite.

Cet affichage est ici produit par famille de tarifs (dans le cas représenté, les solutions de voyage de la famille de tarifs FF1 sont visibles et on peut accéder aux solutions des familles de voyages FF2, FF3, FF4, FF5 par saisie de l'utilisateur au niveau du poste utilisateur 1 en cliquant sur le signet correspondant.

Dans le cas représenté, une classification par tarif est proposée en n'affichant que la solution de voyage à 1295 dollars.

De façon similaire à l'affichage des solutions par famille de tarifs d'indice croissant, on peut visualiser les solutions à des tarifs supérieurs en cliquant sur à la zone correspondante 1695 dollars, 1950 dollars, 2190 dollars, 2290 dollars.

On notera que l'utilisateur peut sélectionner n'importe quel vol aller et n'importe quel vol retour ainsi qu'affiché en figure 4 pour parvenir à une solution de voyage personnalisée à un tarif préalablement décrit de 1295 dollars .

Les figures 6a, 6b montrent un mode de réalisation supplémentaire de la présente invention dans lequel l'information produite en réponse à la requête du client est présentée graphiquement de façon différente.

Dans le cas de la figure 6a, en effet, peu de solutions de voyage sont proposées mais des solutions sont présentes et affichées simultanément pour divers prix dans divers familles de tarifs (FF1, FF2, FF3, FF4, FF5).

Si l'utilisateur souhaite plus d'informations, à savoir plus de propositions de solutions de voyage à l'intérieur d'une des catégories affichées, un lien (illustré « plus de vols ») lui permet d'accéder à une fenêtre additionnelle représentée en figure 6b, dans laquelle les solutions supplémentaires de segment aller et de segment retour sont visualisés pour offrir plus de choix de sélection de solutions de voyage.

Toujours à titre préféré mais non limitatif, la présente invention peut utiliser une fonction de calendrier permettant la formation des critères d'entrée précédemment indiqués en deux temps par l'utilisateur.

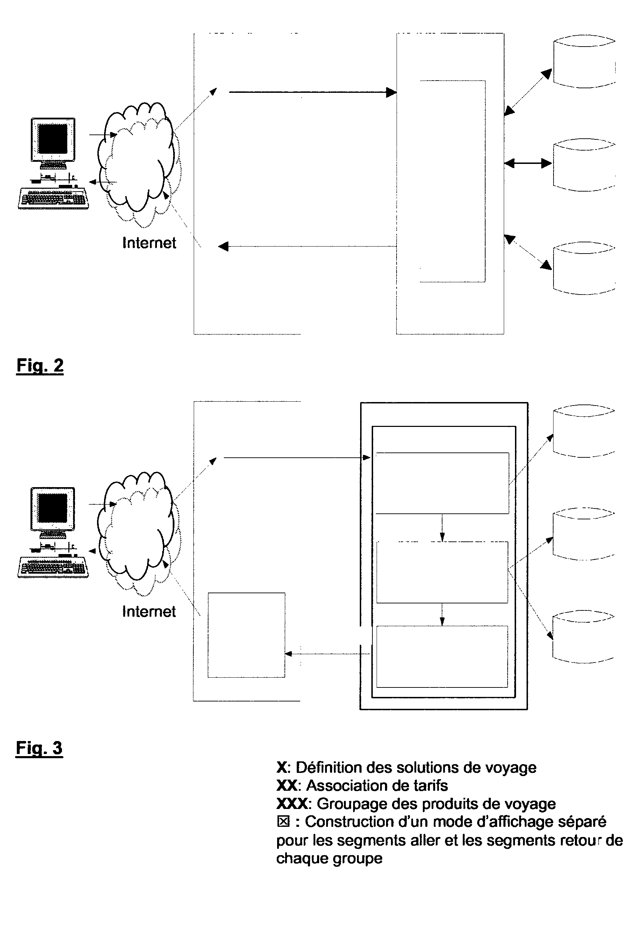

Ainsi, tel que représenté en figure 2, l'utilisateur commence par saisir une requête générale au niveau du poste client 1, requête transmise par le serveur Web 2 au niveau de l'application 3.

Une application de calendrier 4, (schématisée en figure 1) permet de retourner une première information à l'utilisateur sous forme d'une réponse du type illustrée en figure 5.

A cette figure, un intervalle de dates correspondant à l'intervalle de requête de l'utilisateur est affiché pour la date de voyage aller et la date de voyage retour.

Pour chaque paire de dates aller / retour, la solution de voyage calculée au prix de vente le plus bas est affiché.

L'utilisateur peut ainsi de façon fort synthétique, visualiser la combinaison de dates permettant de voyager au plus bas tarif.

Il peut également choisir le meilleur compromis possible et les convenances de dates.

Après sélection d'une paire de dates Aller / Retour, en cliquant sur la case d'intersection, le poste utilisateur 1, via son application de navigation, retourne une requête comprenant les critères d'entrée aptes au traitement précédemment décrit.

Le traitement alors réalisé correspond sensiblement à celui schématisé à la figure 3 et précédemment décrit plus en détail, notamment en référence à la figure 7.

### REFERENCES

- 1.: Poste utilisateur
- 2.: Serveur Web
- 3.: Serveur d'application
- 4.: Application de calendrier
- 5.: Réseau de large extension
- FDB: Base de données de segments de voyage
- TDB: Base de données de tarifs
- FFDB: Base de données de familles de tarifs
- MT: Moteur de recherche de tarifs
- MG: Moteur de groupage
- MF: Moteur de recherche de solutions de voyage

## Revendications

1. Dispositif de réservation de produits de voyage comportant un système informatique central de traitement des requêtes d'utilisateur portant sur un voyage avec un trajet aller et un trajet retour, comprenant des moyens pour calculer et retourner à l'utilisateur une information relative à des produits de voyage incluant des prix de vente, ledit système informatique central étant accessible depuis au moins un poste utilisateur (1),
**Caractérisé par le fait que**,
Il comporte :
- Un moteur de recherche de solutions de voyage (MF) pouvant accéder à au moins une base de données de segments de voyage (FDB) et présentant des moyens pour déterminer les segments aller et les segments retour répondant à des critères d'entrée, lesdits critères d'entrée comprenant au moins une date de voyage aller, une date de voyage retour et des données de définition d'un itinéraire de voyage comprenant un trajet aller et un trajet retour, et des moyens pour définir des solutions de voyage possibles par association, par paires, de segments aller et de segments retour en appliquant des règles d'association ;
- Un moteur de recherche de tarif présentant des moyens pour déterminer, par accès à au moins une base de données de tarifs (TDB), le tarif associé aux solutions de voyage pour former des produits de voyage commercialisables ;
- Un moteur de groupage (MG) des produits de voyage appliquant des critères de groupage comprenant au moins un critère d'équivalence de tarif ;
- Des moyens pour extraire de chaque groupe de produits de voyage les segments aller et les segments retour ;
- Des moyens pour produire un affichage d'informations sur au moins un groupe de produits de voyage de façon séparée pour les segments aller et les segments retour, au niveau du poste utilisateur (1).

2. Dispositif selon la revendication 1,
**Caractérisé par le fait que** :
- La requête de l'utilisateur comporte un intervalle de dates de voyage aller et/ou retour ;
- Il comporte une application de calendrier (4), pour chaque combinaison de date de voyage aller et de date de voyage retour, pour déterminer le produit de voyage ayant le tarif le plus bas ;
- Il comporte des moyens pour produire un affichage d'informations relatives au produit de voyage répondant à la requête et ayant le tarif le plus bas, pour chaque combinaison de dates de voyage aller et de dates de voyage retour, au niveau du poste utilisateur (1) permettant à l'utilisateur de sélectionner un produit de voyage pour une combinaison de dates de voyage aller et retour ;
- Il comporte des moyens pour retourner ladite combinaison de dates de voyage aller et retour au système central pour l'intégrer dans les critères d'entrée en tant que date de voyage aller et date de voyage retour.

3. Dispositif selon l'une quelconque des revendications 1 à 2,
**Caractérisé par le fait que**,
Le moteur de recherche de tarifs (MT) est configuré pour déterminer, en premier lieu, le tarif des solutions de voyage ne présentant pas de segments aller ni de segments retour communs.

4. Dispositif selon les revendications 1 à 3,
**Caractérisé par le fait que**,
Les critères de groupage comportent au moins un des critères suivants :
- Identité des tronçons des segments
- Identité du prix total par voyageur
- Identité des paramètres de tarification

5. Dispositif selon l'une quelconque des revendications 1 à 4,
**Caractérisé par le fait que**,
Il comporte une base de données de familles de tarifs (FFDB) contenant des règles de détermination de l'appartenance à une famille de tarifs pour chaque tarif de voyage, ladite base de données de familles de tarifs étant accessible par le moteur de recherche de tarifs (MT) pour trier les produits de voyage par famille de tarifs.

6. Dispositif selon la revendication 5
**Caractérisé par le fait que**,
Les critères de groupage comportent un critère d'identité de famille de tarifs.

7. Dispositif selon la revendication 5 ou 6,
**Caractérisé par le fait que**,
La base de données de familles de tarifs (FFDB) inclut des classes commerciales de familles de tarifs associant un groupe de famille de tarifs et un marché géographique prédéfini, pour un ensemble de dates de requête prédéterminé.

8. Dispositif selon la revendication 7,
**Caractérisé par le fait que**,
Il comporte des moyens de sélection d'au moins une classe commerciale de familles de tarifs, pour déterminer des produits de voyage répondant à la requête de l'utilisateur.

9. Procédé de traitement d'une requête d'un utilisateur portant sur un voyage avec un trajet aller et un trajet retour, dans lequel on calcule et on retourne à l'utilisateur une information relative à des produits de voyage incluant des prix de vente, comportant les étapes suivantes :
- Détermination, par accès à au moins une base de données de segments de voyage (FDB), des segments aller et des segments retour répondant à des critères d'entrée, lesdits critères d'entrée comprenant au moins une date de voyage aller, une date de voyage retour et des données de définition d'un itinéraire de voyage comprenant un trajet aller et un trajet retour ;
- Définition des solutions de voyage possibles par association, par paires, de segments aller et de segments retour en appliquant des règles d'association ;
- Détermination par accès à au moins une base de données de tarifs (TDB), le tarif associé aux solutions de voyage pour former des produits de voyage commercialisables ;
- Un groupage des produits de voyage en appliquant des critères de groupage comprenant au moins un critère d'équivalence de tarif ;
- Extraction de chaque groupe de produits de voyage des segments aller et des segments retour ;
- Production d'un affichage d'informations sur au moins un groupe de produits de voyage de façon séparée pour les segments aller et les segments retour, au niveau du poste utilisateur (1).

10. Procédé selon la revendication 9,
**Caractérisé par le fait que**,
Il comporte les étapes préliminaires suivantes :
- Réception d'une requête d'un utilisateur comprenant un intervalle de dates de voyage aller et/ou retour ;
- Un traitement de la requête par une application de calendrier (4) consistant à, pour chaque combinaison de dates de voyage aller et de dates de voyage retour, déterminer le produit de voyage ayant le tarif le plus bas ;
- Production d'un affichage d'informations relatives au produit de voyage répondant à la requête et ayant le tarif le plus bas, pour chaque combinaison de dates de voyage aller et de dates de voyage retour, au niveau du poste utilisateur (1) ;
- Sélection au niveau du poste utilisateur (1) d'un produit de voyage pour une combinaison de dates de voyage aller et retour ;
- Envoi de ladite combinaison de dates de voyage aller et retour au système central pour l'intégrer dans les critères d'entrée en tant que date de voyage aller et date de voyage retour.

11. Procédé selon la revendication 9 ou 10,
**Caractérisé par le fait que**,
On détermine le tarif associé aux solutions de voyage en commençant par les solutions de voyage ne présentant pas de segment aller ni de segment retour en commun.

12. Procédé selon l'une quelconque des revendications 9 à 11,
**Caractérisé par le fait que**,
On utilise comme critère de groupage au moins un des critères suivants :
- Identité des tronçons des segments
- Identité du prix total par voyageur
- Identité des paramètres de tarification

13. Procédé selon l'une quelconque des revendications 9 à 12,
**Caractérisé par le fait que**,
On met en oeuvre les étapes suivantes :
- Accès à une base de données de famille de tarifs contenant des règles de détermination de l'appartenance à au moins une famille de tarifs pour chaque tarif de voyage ;
- Tri des produits de voyage par famille de tarifs.

14. Procédé selon la revendication 13,
**Caractérisé par le fait que**,
On utilise l'appartenance à une même famille de tarifs comme critère de groupage des produits de voyage.

15. Procédé selon la revendication 13 ou 14,
**Caractérisé par le fait que**,
La création, dans la base de données de familles de tarifs (FFDB), des classes commerciales de familles de tarifs associant au moins un groupe de familles de tarifs à un marché géographique prédéfini, pour un ensemble de dates de requête prédéterminé.

16. Procédé selon la revendication 15,
**Caractérisé par le fait que**,
On sélectionne une ou plusieurs classes commerciales de familles de tarifs pour déterminer des produits de voyage répondant à la requête de l'utilisateur.

17. Procédé selon l'une quelconque des revendications 9 à 16,
**Caractérisé par le fait que**,
- On produit l'affichage d'informations pour un nombre prédéfini de segments aller et de segments retour d'un groupe de produits de voyage ;
- On produit l'affichage d'un message de proposition d'affichage d'informations pour d'autres segments aller ou d'autres segments retour du groupe de produits de voyage ;
- Sur saisie d'une instruction par l'utilisateur, on produit ledit affichage d'informations pour d'autres segments aller ou d'autres segments retour du groupe de produits de voyage.

18. Procédé selon l'une quelconque des revendication 9 à 17
**Caractérisé par** les opérations suivantes :
- Production d'un affichage d'informations pour des produits de voyage du groupe de produit de voyage au tarif le plus bas ;
- Production de l'affichage d'un message de proposition d'affichage d'informations pour au moins un autre groupe de produits de voyage ;
- Sur saisie d'une instruction par l'utilisateur, production d'un affichage d'informations pour ledit autre groupe de produits de voyage.

19. Produit programme d'ordinateur comprenant des instructions de programme pour, lorsqu'il est exécuté par un ordinateur :
- Déterminer, par accès à au moins une base de données de segments de voyage (FDB), les segments aller et les segments retour répondant à des critères d'entrée comprenant au moins une date de voyage aller, une date de voyage retour et des données de définition d'un itinéraire de voyage comprenant un trajet aller et un trajet retour ;
- Définir des solutions de voyage possibles par association, par paires, de segments aller et de segments retour en appliquant des règles d'associations ;
- Déterminer, par accès à au moins une base de données de tarifs (TDB), le tarif associé aux solutions de voyage pour former des produits de voyage commercialisables ;
- Grouper les produits de voyage en appliquant des critères de groupage comprenant au moins un critère d'équivalence de tarif ;
- Extraire de chaque groupe de produits de voyage les segments aller et les segments retour ;
- Produire un affichage d'informations sur au moins un groupe de produits de voyage de façon séparée pour les segments aller et les segments retour.
